Europäisches Patentamt

European Patent Office

Office européen des brevets

(19)

(11) **EP 1 056 241 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(51) Int Cl.⁷: **H04L 9/32**

(21) Anmeldenummer: **00110486.8**

(22) Anmeldetag: **17.05.2000**

(54) **Verfahren zur Verschlüsselung einer numerischen Information und Sendemodul**

Method for encrypting a digital information and transmission module

Procédé de chiffrage d'une information numérique et module de transmission

(84) Benannte Vertragsstaaten:
**DE FR GB IT**

(30) Priorität: **27.05.1999 DE 19924271**
**06.12.1999 DE 19958599**

(43) Veröffentlichungstag der Anmeldung:
**29.11.2000 Patentblatt 2000/48**

(73) Patentinhaber: **ROBERT BOSCH GMBH**
**70442 Stuttgart (DE)**

(72) Erfinder: **Adi, Wael**
**38108 Braunschweig (DE)**

(56) Entgegenhaltungen:
**EP-A- 0 252 499        EP-A- 0 325 238**
**EP-A- 0 682 327**

• **SCHNEIER, B: "Applied Cryptography, Protocols, Algorithms and Source Code in C, Second Edition" 1996 , JOHN WILEY & SONS, INC. , NEW YORK XP002202501 * Seite 242 - Seite 243 ***

**Beschreibung**

Stand der Technik

Die Erfindung geht von einem Verfahren zur Verschlüsselung einer numerischen Information und von einem Sendemodul nach der Gattung der unabhängigen Ansprüche aus.

Aus der EP 0682 327 A2 ist ein Verfahren und eine Vorrichtung bekannt, bei denen die Verwendung eines originalen Fiat-Shamir Identifikationsschemas sowie eine neue raumeffiziente Variante des Fiat-Shamir Schemas vorgesehen ist. Bei der neuen Variante wird eine verschlüsselte numerische Information in einem als Smart-Karte ausgebildeten Sender gebildet, in dem ein vorgegebener Multiplikand mit einem vorgegebenen zugeordneten Multiplikator multipliziert wird (x*x bzw. x*c). Zu diesem Produkt wird ein zufälliges Vielfaches eines vorgegebenen Divisors addiert.

Aus der Veröffentlichung "Handbook of Applied Cryptography", Menezes et Al, CRC Press 1997 ist ein Verfahren zur Verschlüsselung einer von einem Sendemodul an ein Empfangsmodul abzugebenden numerischen Identifikationsinformation bekannt, deren Gültigkeit im Empfangsmodul in Abhängigkeit des bei Division der numerischen Identifikationsinformation durch einen vorgegebenen Divisor sich ergebenden Restes geprüft wird.

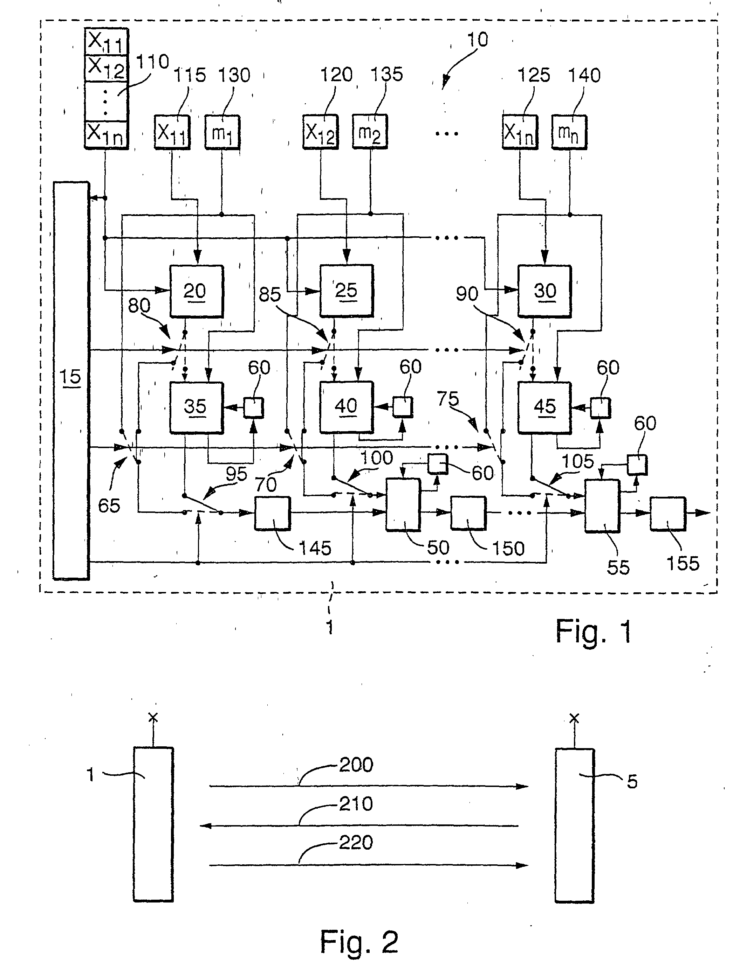

Um die Identität des Sendemoduls festzustellen wird dabei eine asymmetrische Identifikation durch eine in Kryptosystemen bekannte Abfrage-Antwort-Technik durchgeführt. Ein Beispiel dafür ist das erweiterte FIAT-SHAMIR-Protokoll mit Rabin-Schloss. Die Abfrage-Antwort-Technik ist dabei in Figur 2 dargestellt. In Figur 2 kennzeichnet 1 das Sendemodul und 5 ein Empfangsmpdul. Das Empfangsmodul 5 ist dabei eine, vorzugsweise ortsfeste, prüfende Station, die die Identität des Sendemoduls 1 prüfen soll. Das aus dem Sendemodul 1 und dem Empfangsmodul 5 gebildete System wird zunächst initialisiert durch Auswahl bzw. Vorgabe eines Divisors m, wobei der Divisor m als Produkt aus einer ersten großen Primzahl $p_1$ und einer zweiten großen Primzahl $p_2$ gebildet sein kann, wobei die beiden großen Primzahlen $p_1$, $p_2$ in Binär-Darstellung jeweils ca. 512 Bit umfassen. Die beiden großen Primzahlen $p_1, p_2$ können dabei so gewählt werden, daß ihr um 1 reduzierter Wert jeweils einen großen Primfaktor aufweist, der im Optimalfall den um 1 reduzierten Wert halbiert. Alle mathematischen Operationen zur Identifikation des Sendemoduls 1 durch das Emfpangsmodul 5 werden modulo m durchgeführt. Im Sendemodul 1 ist ein erster Vektor X von ersten Identifikationszahlen $X_1$, $X_2$,...,$X_t$ definiert, die nicht autorisierten Benutzern unbekannt sein sollten. Die Sendestation 1 veröffentlicht hingegen einen zweiten Vektor Y mit zweiten Identifikationszahlen $Y_1$, $Y_2$, ...,$Y_t$, die dem Empfangsmodul 5 bekannt gemacht werden. Damit ist das System initialisiert. Die zweiten Identifikationszahlen $Y_1$, $Y_2$,...,$Y_t$ werden dabei aus den ersten Identifikationszahlen $X_1$, $X_2$,...,$X_t$ wie folgt gebildet:

$$Y_1 = X_1{}^2,\ Y_2 = X_2{}^2,\ ....Y_t = X_t{}^2.$$

In einem ersten Programmschritt 200 gemäß Figur 2 stellt sich das Sendemodul 1 dem Empfangsmodul 5 durch Senden seines Namens A und einer zweiten Zufallszahl S vor, wobei $S = R^2$ gilt und R im Sendemodul 1 als eine erste Zufallszahl gewählt wird. Die erste Zufallszahl R sollte dabei nicht autorisierten Benutzern unbekannt und genauso wie die ersten Identifikationszahlen $X_1$, $X_2$, ...,$X_t$ im Sendemodul 1 vor unerwünschtem Zugriff geschützt sein.

Nach Empfang des Namens A und der zweiten Zufallszahl S wählt das Empfangsmodul 5 eine Zufallsfolge B mit Zufallsexponenten $b_1$, $b_2$, ...,$b_t$ und sendet sie bei einem Programmpunkt 210 an das Sendemodul 1.

Das Sendemodul 1 berechnet dann eine numerische Identifikationsinformation $Z = \cdot X_1{}^{b_1} \cdot X_2{}^{b_2} \cdot ... \cdot X_t{}^{b_t}$ und sendet die numerische Identifikationsinformation Z bei einem Programmpunkt 220 an das Empfangsmodul 5 als Beweis dafür, daß das Sendemodul 1 die Quadratwurzel der zweiten Zufallszahl S, nämlich die erste Zufallszahl R, und die ersten' Identifikationszahlen $X_1$, $X_2$, ...,$X_t$ kennt.

Das Empfangsmodul 5 berechnet eine numerische Prüfinformation $Z'=S \cdot Y_1{}^{b_1} \cdot Y_2{}^{b_2} \cdot ... \cdot Y_t{}^{b_t}$

Für den Fall, daß die numerische Prüfinformation Z' gleich dem Quadrat der numerischen Identifikationsinformation Z ist, identifiziert das Empfangsmodul 5 das Sendemodul 1 und unterscheidet es von nachgebauten oder gestohlenen Sendemodulen, die den gleichen Namen A an das Empfangsmodul 5 senden.

Sämtliche beschriebenen mathematischen Operationen, das heißt auch sämtliche beschriebene Multiplikationen und Teilmultiplikationen werden dabei modulo m durchgeführt. Dies erhöht noch den Grad der Verschlüsselung der ersten Zufallszahl R und der ersten Identifikationszahlen $X_1$, $X_2$, ...,$X_t$. Somit sind sämtliche numerischen Informationen, die vom Sendemodul 1 an das Empfangsmodul 5 übertragen werden durch die modulo m Operation verschlüsselt. Ausgenommen davon ist bestenfalls die Übertragung des Namens A. Im Sendemodul 1 werden somit je nach Anzahl der erforderlichen Multiplikationen entsprechende modulo m Rechenoperationen erforderlich, die sehr aufwendig sind. Dasselbe gilt auch für die im Empfangsmodul 5 durchzuführenden Multiplikationen und modulo m Rechenoperationen, die für die Identifizierung des Sendemoduls 1 erforderlich simd. Denn schließlich wird im Empfangsmodul 5 nicht die numerische Prüfinformation Z' direkt mit dem Quadrat der numerischen Identifikationsinformation verglichen, sondern jeweils durch modulo m Rechenoperationen reduzierte Werte.

Vorteile der Erfindung

Das erfindungsgemäße Verfahren und das erfindungsgemäße Sendemodul mit den Merkmalen der unabhängigen Ansprüche haben demgegenüber den Vorteil, daß die verschlüsselte numerische Information im Sendemodul gebildet wird, indem mindestens ein vorgegebener Multiplikand mit einem vorgegebenen zugeordneten Multiplikator multipliziert und vom dabei entstehenden Produkt ein zufälliges Vielfaches des vorgegebenen Divisors subtrahiert wird, wobei dieses Vielfache kleiner als das Produkt ist, und das die so gebildete verschlüsselte numerische Information an das Empfangsmodul abgegeben wird. Auf diese Weise werden vom Sendemodul erzeugte numerische Informationen durch Subtraktion mit einer Zufallszahl reduziert und damit verschlüsselt und vor Zugriff geschützt, wobei die eigentliche modulo Rechenoperation in einem Empfangsmodul durchgeführt wird. Die Reduktion der numerischen Information durch Subtraktion erfordert erheblich weniger Aufwand als die Reduktion durch die modulo Rechenoperation, so daß im Sendemodul erheblicher Rechenaufwand eingespart werden kann, ohne den Schutz der numerischen Information vor Zugriff zu verringern. Diese Verringerung des Rechenaufwandes im Sendemodul ermöglicht auch einen geringeren Aufwand an Bauteilen und elektrischer Energie. Dies ist besonders bei Ausbildung des Sendemoduls als Mobilfunkgerät von Vorteil, da Gewicht eingespart und größere Betriebszeiten bei gleicher Akkumulatorkapazität erreicht werden können. Dieser Vorteil wird aber durch einen entsprechenden Mehraufwand an modulo Rechenoperationen im Empfangsmodul erkauft. Das Empfangsmodul wird jedoch in der Regel ortsfest und für die Prüfung mehrerer Sendemodule zuständig sein, so daß weniger Rücksicht auf Platz- und Energiebedarf erforderlich ist.

Durch die in den Unteransprüchen aufgeführten Maßnahmen sind vorteilhafte Weiterbildungen und Verbesserungen'des in den unabhängigen Ansprüchen angegebenen Verfahrens und Sendemoduls möglich.

Besonders vorteilhaft ist es, daß mindestens ein Teilprodukt mit dem Wert Null bei der Bildung des Produkts durch einen negativen Teil des zufälligen Vielfachen, der durch den Divisor teilbar ist, oder durch das negative zufällige Vielfache selbst ersetzt wird. Auf diese Weise kann der zur Reduktion der numerischen Information erforderliche Subtraktionsprozess in den Multiplikationsprozess integriert werden, so daß lediglich ein Multiplizierer, jedoch kein zusätzliches Subtraktionsglied erforderlich ist und somit der erforderliche Aufwand an Bauteilen und elektrischer Energie im Sendemodul noch weiter verringert werden kann.

Der Rechenaufwand kann in vorteilhafter Weise auch dadurch verringert werden, daß mindestens ein Teilprodukt bei der Bildung des Produkts stellengleich mit zumindest einem negativen Teil des zufälligen Vielfachen, der durch den Divisor teilbar ist, oder mit dem negativen zufälligen Vielfachen selbst addiert wird, um ein erweitertes Teilprodukt zu bilden. Auch auf diese Weise wird der erforderliche Subtraktionsprozess in den Multiplikationsprozess integriert und somit der Aufwand an Bauteilen und elektrischer Energie verringert. Für die Bildung der erweiterten Teilprodukte sind weniger Addierer erforderlich, als für die Subtraktion des zufälligen Vielfachen vom Produkt selbst.

Ein weiterer Vorteil ergibt sich dadurch, daß für die Anzahl der Nullstellen des Multiplikators etwa die Hälfte der Gesamtanzahl der Stellen des Multiplikators gewählt wird. Auf diese Weise wird die Sicherheit der vom Sendemodul erzeugten numerischen Information vor unberechtigtem Zugriff maximiert.

Zeichnung

Ein Ausführungsbeispiel der Erfindung ist in der Zeichnung dargestellt und in der nachfolgenden Beschreibung näher erläutert.

Es zeigen

Figur 1 ein Blockschaltbild eines erfindungsgemäßen Sendemoduls,
Figur 2 einen Ablaufplan für ein System zur Identifikation eines Sendemoduls durch ein Empfangsmodul gemäß dem Stand der Technik,
Figur 3(a) ein Rechenbeispiel für einen Multiplikationsvorgang im Sendemodul nach dem Stand der Technik,
Figur 3 (b) ein Rechenbeispiel für einen Multiplikationsvorgang im Sendemodul gemäß der Erfindung und
Figur 4 einen Ablaufplan für die Funktionsweise der Steuerung.

Beschreibung des Ausführungsbeispiels

In Figur 1 ist das Sendemodul 1 dargestellt. Das Sendemodul 1 umfaßt Mittel 10 zur Verschlüsselung einer numerischen Information $Y_1 = X_1{}^2$, die eine der zweiten Identifikationszahlen $Y_1$, $Y_2$,...,$Y_t$ für die Identifikation des Sendemoduls 1 durch das Empfangsmodul 5 durch das gemäß Figur 2 beschriebene Identifikationsverfahren sein kann. Bei der zu verschlüsselnden numerischen Information kann es sich jedoch um jede beliebige numerische Information handeln. In Figur 1 sind nur die für die Erfindung wesentlichen Bestandteile des Sendemoduls 1 dargestellt, die zur Verschlüsselung der numerischen Information $Y_1$ dienen. Weitere Bauteile des Sendemoduls 1, wie beispielsweise Modulations- oder Demodulationsvorrichtungen sind in Figur 1 nicht dargestellt. Bei dem Sendemodul 1 kann es sich beispielsweise um ein Mobilfunkgerät aber auch um jedes andere'beliebige elektronische Gerät, wie beispielsweise ein Autoradio, ein Personalcomputer, ein Schnurlostelefon, ein schnurgebundenes Telefon, usw. handeln. Im folgenden wird die Ermittlung der numerischen Information $Y_1$ und ihre Verschlüsselung durch Rechenoperationen im binären Zahlensystem beschrieben. Es kann jedoch auch jedes beliebige andere Zahlensystem zur Ermittlung der numerischen Information und ihrer Verschlüsselung vorgesehen sein.

Die Mittel 10 zur Verschlüsselung umfassen ein erstes Register 110, in dem ein Multiplikator M bitweise in binärem Zahlenformat abgespeichert ist. Im binären Zahlensystem läßt sich der Multiplikator M wie folgt schreiben: M = $X_{11}X_{12}...X_{1n}$, wobei $X_{11}$ das höchstwertige Bit, $X_{12}$ das zweithöchstwertige Bit und $X_{1n}$ das niedrigstwertige Bit des Multiplikators M im binären Zahlensystem darstellt. Sämtliche Bits des Multiplikators M sind zusätzlich jeweils in einem eigenen Register abgespeichert. So ist das höchstwertige Bit $X_{11}$ des Multiplikators M zusätzlich in einem zweiten Register 115, das zweithöchstwertige Bit $X_{12}$ des Multiplikators M in einem dritten Register 120 und das niedrigstwertige Bit $X_{1n}$ des Multiplikators M in einem vierten Register 125 abgespeichert. Für weitere, in Figur 1 nicht dargestellte Bits des Multiplikators M ist in gleicher Weise jeweils ein eigenes Register vorgesehen. Die Anzahl der Bits des Multiplikators M beträgt beim Ausführungsbeispiel nach Figur 1 gleich n, wobei n jede beliebige natürliche Zahl $\geq 1$ annehmen kann und im Ausführungsbeispiel nach Figur 1 größer oder gleich 3 gewählt ist.

Es ist außerdem ein Divisor m vorgesehen, der gemäß dem nach Figur 2 beschriebenen Verfahren für die modulo Rechenoperation vorgesehen sein kann. Der Divisor m läßt sich im binären Zahlensystem wie folgt schreiben:

m = $m_1m_2...m_n$, wobei $m_1$ das höchstwertige Bit, $m_2$ das zweithöchstwertige Bit und $m_n$ das niedrigstwertigste Bit des Divisors m darstellt. Für das höchstwertige Bit $m_1$ des Divisors m ist ein fünftes Register 130 vorgesehen. Für das zweithöchstwertige Bit $m_2$ des Divisors m ist ein sechstes Register 135 vorgesehen. Für das niedrigstwertige Bit $m_n$ des Divisors m ist ein siebtes Register 140 vorgesehen. Für allen weiteren, in Figur 1 nicht dargestellten Bits des Divisors m ist ebenfalls jeweils ein Register vorgesehen.

Gemäß dem Ausführungsbeispiel nach Figur 1 ist im zweiten Register 115, im dritten Register 120, im vierten Register 125 und ggf. in weiteren, in Figur 1 nicht dargestellten Registern jeweils ein Bit des Multiplikators M abgespeichert. Generell ist in diesen Registern jedoch jeweils ein Bit eines beliebigen vorgebbaren Multiplikanden N abgespeichert, der in dem hier beschriebenen Ausführungsbeispiel nach Figur 1 als Spezialfall dem Multiplikator M entspricht.

Gemäß Figur 1 ist ein erster Multiplizierer 20 vorgesehen, dem einerseits das im zweiten Register 115 gespeicherte höchstwertige Bit $X_{11}$ des Multiplikators M und andererseits in aufeinanderfolgenden Verarbeitungsschritten sämtliche Bits des ersten Registers 110 zugeführt sind. Somit werden im ersten Multiplizierer 20 sämtliche Bits des ersten Registers 110 in aufeinanderfolgenden getakteten Verarbeitungsschritten beginnend beim niedrigstwertigen Bit $X_{1n}$ bis zum höchstwertigen Bit $X_{11}$ des Multiplikators M jeweils mit dem höchstwertigen Bit $X_{11}$ des Multiplikators M multipliziert. Es ist weiterhin ein zweiter Multiplizierer 25 vorgesehen, der in entsprechender Weise einerseits mit dem dritten Register 120 und andererseits mit dem ersten Register 110 verbunden ist, so daß die Bits $X_{11}$, $X_{12}$, ...,$X_{1n}$ des Multiplikators M in den aufeinanderfolgenden getakteten Verarbeitungsschritten in der beschriebenen Reihenfolge, beginnend beim niedrigstwertigen Bit $X_{1n}$ bis zum höchstwertigen Bit $X_{11}$ des Multiplikators M jeweils mit dem zweithöchstwertigen Bit $X_{12}$ des Multiplikators M multipliziert werden. Weiterhin ist ein dritter Multiplizierer 30 vorgesehen, der in entsprechender Weise einerseits mit dem vierten Register 125 und andererseits mit dem ersten Register 110 verbunden ist und somit in den aufeinanderfolgenden getakteten Verarbeitungsschritten sämtliche Bits $X_{11}$, $X_{12}$, ..., $X_{1n}$ des Multiplikators M in der beschriebenen Reihenfolge beginnend beim niedrigstwertigen Bit $X_{1n}$ bis zum höchstwertigen Bit $X_{11}$ des Multiplikators M jeweils mit dem niedrigstwertigen Bit $X_{1n}$ des Multiplikators M multipliziert. Gegebenenfalls sind weitere, in Figur 1 nicht dargestellte Multiplizierer vorgesehen, die weitere Bits des Multiplikators M jeweils mit sämtlichen Bits $X_{11}$, $X_{12}$, ...,$X_{1n}$ des Multiplikators M in den aufeinanderfolgenden getakteten Verarbeitungsschritten in entsprechender Weise multiplizieren. Dabei ist sämtlichen Multiplizierern zu einem Zeitpunkt beziehungsweise während eines Verarbeitungsschritts jeweils dasselbe Bit aus dem ersten Register 110 zugeführt.

Sämtliche Multiplizierer können als logische UND-Glieder ausgeführt sein, da die logische UND-Verknüpfung im binären Zahlensystem einer Multiplikation entspricht.

Sämtliche Bits des ersten Registers 110 sind in den aufeinanderfolgenden getakteten Verarbeitungsschritten sequentiell, beginnend beim niedrigstwertigen Bit $X_{1n}$ bis zum höchstwertigen Bit $X_{11}$ des Multiplikators M auch einer Steuerung 15 zugeführt, so daß zu einem Zeitpunkt bzw. während eines Verarbeitungsschritt das der Steuerung 15 zugeführte Bit des ersten Registers 110 auch dem zu diesem Zeitpunkt sämtlichen Multiplizierern zugeführten Bit aus dem ersten Register 110 entspricht.

Der Ausgang des ersten Multiplizierers 20 ist über einen ersten steuerbaren Schalter 80 entweder einem ersten Eingang eines ersten Addierers 35 oder über einen zweiten steuerbaren Schalter 65 und einen dritten steuerbaren Schalter 95 einem achten Register 145 zuführbar. Der Ausgang des zweiten Multiplizierers 25 ist über einen vierten steuerbaren Schalter 85 entweder einem ersten Eingang eines zweiten Addierers 40 oder über einen fünften steuerbaren Schalter 70 und einen sechsten steuerbaren Schalter 100 einem ersten Eingang eines dritten Addierers 50 zuführbar. Der Ausgang des dritten Multiplizierers 30 ist über einen siebten steuerbaren Schalter 90 entweder einem ersten Eingang eines vierten Addierers 45 oder über einen achten steuerbaren Schalter 75 und einen neunten steuerbaren Schalter 105 einem ersten Eingang eines fünften Addierers 55 zuführbar. Einem zweiten Eingang des ersten Addierers 35 ist der Inhalt des fünften Registers 130 zuführbar. Einem zweiten Eingang des zweiten Addierers 40 ist der Inhalt des sechsten Registers 135 zuführbar. Einem zweiten Eingang des vierten Addierers 45 ist der Inhalt des siebten Registers 140 zuführbar. Der Inhalt des fünften Registers 130 ist außerdem über den zweiten Schalter 65 und den dritten Schalter 95 auch dem achten Register 145 zuführbar. Der Inhalt des sechsten Registers 135 ist außerdem über den fünften Schalter 70 und den sechsten Schalter 100 dem ersten Eingang des dritten Addierers 50 zuführbar. Der Inhalt des siebten Registers 140 ist außerdem über den achten Schalter 75 und den neunten Schalter 105 dem ersten Eingang des fünften Addierers 55 zuführbar.

Ein erster Ausgang des ersten Addierers 35 ist über den dritten Schalter 95 dem achten Register 145 zuführbar. Ein erster Ausgang des zweiten Addierers 40 ist über den sechsten Schalter 100 dem ersten Eingang des dritten Addierers 50 zuführbar. Ein erster Ausgang des vierten Addierers 45 ist über den neunten Schalter 105 dem ersten Eingang des fünften Addierers 55 zuführbar. Alle Addierer umfassen jeweils einen zweiten Ausgang, der über ein Übertragsregister 60 auf einen dritten Eingang des jeweiligen Addierers rückgekoppelt ist, so daß bei jeder Addition ein Übertrag von einer vorhergehenden Addition berücksichtigt werden kann. In jedem Addierer werden sämtliche Eingänge addiert und das Ergebnis auf den jeweiligen ersten Ausgang und der entstehende Übertrag auf den jeweiligen zweiten Ausgang des entsprechenden Addierers gegeben. Ein erster Ausgang des dritten Addierers 50 ist einem neunten Register 150 zugeführt, und ein erster Ausgang des fünften Addierers 55 ist einem zehnten Register 155 zugeführt. Der erste Multiplizierer 20, der erste Addierer 35 mit zugehörigem Übertragsregister 60, das achte Register 145, der erste Schalter 80, der zweite Schalter 65 und der dritte Schalter 95 bilden einen ersten Verarbeitungszweig. Der zweite Multiplizierer 25, der zweite Addierer 40 mit zugehörigem Übertragsregister 60, der dritte Addierer 50 mit zugehörigem Übertragsregister 60, das neunte Register 150, der vierte Schalter 85, der fünfte Schalter 70 und der sechste Schalter 100 bilden einen zweiten Verarbeitungszweig. Der dritte Multiplizierer 30, der vierte Addierer 45 mit zugehörigem Übertragsregister 60, der fünfte Addierer 55 mit zugehörigem Übertragsregister 60, das zehnte Register 155, der siebte Schalter 90, der achte Schalter 55 und der neunte Schalter 105 bilden einen n-ten Verarbeitungszweig. Durch jeweils drei aufeinanderfolgende Punkt ist in Figur 1 angedeutet, daß weitere Verarbeitungszweige für den Fall vorgesehen sind, in dem der Multiplikator M, der Multiplikand N und der Divisor m jeweils mehr als drei Bit umfassen. Weitere erforderliche Verarbeitungszweige sind dabei entsprechend dem zweiten Verarbeitungszweig oder dem n-ten Verarbeitungszweig auszuführen und zwischen dem zweiten Verarbeitungszweig und dem n-ten Verarbeitungszweig anzuordnen. Jedem dieser Verarbeitungszweige ist ein Register zur Speicherung eines Bits des Multiplikanden N und ein Register zur Speicherung eines Bits des Divisors m zugeordnet und in Figur 1 nicht dargestellt. Die gegebenenfalls noch erforderlichen Verarbeitungszweige sind dabei zwischen den zweiten Verarbeitungszweig und den n-ten Verarbeitungszweig so einzufügen, daß die ihnen jeweils zugeordneten Bits des Multiplikanden N und des Divisors m wie in Figur 1 bereits angedeutet in der Reihenfolge vom jeweils höchstwertigen Bit bis zum niedrigstwertigen Bit verarbeitet werden. Für den Fall, daß n = 3 ist, können die durch die 3 Punkte unterbrochenen Linien in Figur 1 jeweils durchgezogen werden. So wäre der Ausgang des neunten Registers 150 auf einen zweiten Eingang des fünften Addierers 155 geführt, wie auch der Ausgang des achten Registers 145 auf einen zweiten Eingang des dritten Addierers 50 geführt ist. Für den Fall, daß n = 2 gewählt wird, kann auf den n-ten Verarbeitungszweig gemäß Figur 1 komplett verzichtet werden. Sämtliche Schalter werden von der Steuerung 15 angesteuert.

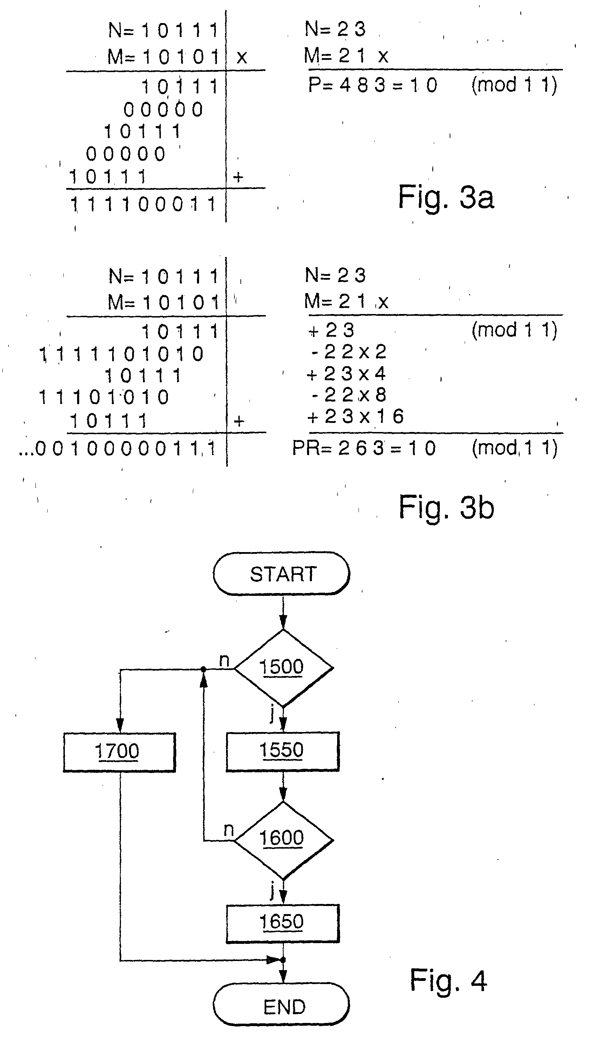

In Figur 4 ist ein Ablaufplan für die Funktionsweise der Steuerung 15 dargestellt. Dabei soll im folgenden der Einfachheit halber angenommen werden, daß n = 3 ist und die gepunkteten Linien in Figur 1 durch durchgezogene Linien ersetzt werden können, da die Mittel 10 zur Verschlüsselung keine weiteren als die in Figur 1 dargestellten Elemente in diesem Fall umfassen. Für diesen Ablaufplan soll angenommen werden, daß ein Verarbeitungsschritt die Verarbeitung eines Bits des Multiplikators M aus dem ersten Register 110 von der Multiplikation mit dem entsprechenden Bit des Multiplikanden N bis zur Speicherung des resultierenden Bits im achten Register 145, im neunten Register 150 oder im zehnten Register 155 umfaßt. Der Ablaufplan gemäß Figur 4 wird dabei für jedes neue Bit des Multiplikators M aus dem ersten Register 110 bzw. für jeden neuen Verarbeitungsschritt erneut durchlaufen.

Bei einem Programmpunkt 1500 prüft die Steuerung 15, ob das für den aktuellen Verarbeitungsschritt der Steuerung 15 zugeführte Bit des Multiplikators M aus dem ersten Register 110 gleich Null ist. Ist dies der Fall, so wird zu einem Programmpunkt 1550 verzweigt, andernfalls wird zu einem Programmpunkt 1700 verzweigt.

Im folgenden sind drei Schalterstellungen von der Steuerung 15 einstellbar. Bei einer ersten Schalterstellung verbindet der zweite Schalter 65 das fünfte Register 130 mit dem dritten Schalter 95. In der ersten Schalterstellung verbindet außerdem der fünfte Schalter 70 das sechste Register 135 mit dem sechsten Schalter 100. In der ersten Schalterstellung verbindet außerdem der achte Schalter 75 das siebte Register 140 mit dem neunten Schalter 105.

In der zweiten Schalterstellung und in der dritten Schalterstellung verbindet der zweite Schalter 65 den ersten Schalter 80 mit dem dritten Schalter 95, der fünfte Schalter 70 den vierten Schalter 85 mit dem sechsten Schalter 100 und der achte Schalter 75 den siebten Schalter 90 mit dem neunten Schalter 105.

In der zweiten Schalterstellung verbindet außerdem der erste Schalter 80 den ersten Multiplizierer 20 mit dem ersten Addierer 35, der vierte Schalter 85 den zweiten Multiplizierer 25 mit dem zweiten Addierer 40, der siebte Schalter 90 den dritten Multiplizierer mit dem vierten Addierer 45, der dritte Schalter 95 den ersten Addierer 35 mit dem achten Register 145, der sechste Schalter 100 den zweiten Addierer 40 mit dem dritten Addierer 50 und der neunte Schalter 105 den vierten Addierer 45 mit dem fünften Addierer 55.

In der dritten Schalterstellung verbindet der erste Schalter 80 den ersten Multiplizierer 20 mit dem zweiten Schalter 65, der vierte Schalter 85 den zweiten Multiplizierer 25 mit dem fünften Schalter 70, der siebte Schalter 90 den dritten Multiplizierer 30 mit dem achten Schalter 75, der dritte Schalter 95 den zweiten Schalter 65 mit dem achten Register 145, der sechste Schalter 100 den fünften Schalter 70 mit dem dritten Addierer 50 und der neunte Schalter 105 den achten Schalter 75 mit dem fünften Addierer 55.

Bei Programmpunkt 1550 wählt die Steuerung nach dem Zufallspinzip eine von den drei beschriebenen Schalterstellungen aus und steuert die Schalter 65, 70, 75, 80, 85, 90, 95, 100, 105 zur Realisierung der gewählten Schalterstellung an. Anschließend wird zu einem Programmpunkt 1600 verzweigt. Bei Programmpunkt 1600 prüft die Steuerung 15, ob die erste Schalterstellung gewählt wurde. Ist dies der Fall, so wird zu einem Programmpunkt 1650 verzweigt, andernfalls wird zum Programmpunkt 1700 verzweigt. Beim Programmpunkt 1650 steuert die Steuerung 15 den dritten Schalter 95 so an, daß er den zweiten Schalter 65 mit dem achten Register 145 verbindet. Außerdem steuert die Steuerung 15 den sechsten Schalter 100 so an, daß er den fünften Schalter 70 mit den ersten Eingang des dritten Addierers 50 verbindet. Außerdem steuert die Steuerung 15 den neunten Schalter 105 so an, daß er den achten Schalter 75 mit dem ersten Eingang des fünften Addierers 55 verbindet. Anschließend wird das Programm verlassen, bzw. das Ende des Ablaufplans erreicht. Bei Programmpunkt 1700 wählt die Steuerung 15 nach dem Zufallsprinzip entweder die zweite Schalterstellung oder die dritte Schalterstellung aus und steuert die Schalter 65, 70, 75, 80, 85, 90, 95, 100, 105 so an, daß die gewählte Schalterstellung realisiert wird. Anschließend wird das Programm verlassen bzw. das Ende des Ablaufplans erreicht.

Im Unterschied zur bisher beschriebenen ersten Ausführungsform der Erfindung läßt sich die Erfindung auch in einer zweiten Ausführungsform dadurch realisieren, daß die Steuerung 15 nur die zweite Schalterstellung oder die dritte Schalterstellug einstellen kann, nicht jedoch die erste Schalterstellung.

In einer dritten Ausführungsform kann es vorgesehen sein, daß die Steuerung 15 nur die erste Schalterstellung oder die dritte Schalterstellung, nicht jedoch die zweite Schalterstellung auswählen kann. In diesem Fall ist der erste Addierer 35 mit zugehörigem Übertragsregister 60, der zweite Addierer 40 mit zugehörigem Übertragsregister 60 und der vierte Addierer 45 mit zugehörigem Übertragsregister 60 nicht erforderlich. Der erste Schalter 80 kann durch eine dauerhafte Verbindung zwischen dem ersten Multiplizierer 20 und dem zweiten Schalter 65 ersetzt werden. Der vierte Schalter 85 kann durch eine permanente Verbindung zwischen dem zweiten Multiplizierer 25 und dem fünften Schalter 70 ersetzt werden. Der siebte Schalter 90 kann durch eine permanente Verbindung zwischen dem dritten Multiplizierer 30 und dem achten Schalter 75 ersetzt werden. Der dritte Schalter 95 kann durch eine permanente Verbindung zwischen dem zweiten Schalter 65 und dem achten Register 145 ersetzt werden. Der sechste Schalter 100 kann durch eine permanente Verbindung zwischen dem fünften Schalter 70 und dem ersten Eingang des dritten Addierers 50 ersetzt werden. Der neunte Schalter 105 kann durch eine permanente Verbindung zwischen dem achten Schalter 75 und dem ersten Eingang des fünften Addierers 55 ersetzt werden.

Bei der zweiten Ausführungsform durchläuft die Steuerung 15 nur den Programmpunkt 170 des Ablaufplans gemäß Figur 4, wonach sie für jeden Verarbeitungsschritt zufällig zwischen der zweiten Schalterstellung und der dritten Schalterstellung auswählt.

Bei der dritten Ausführungsform durchläuft die Steuerung 15 den Ablaufplan gemäß Figur 4 wie folgt. Bei Programmpunkt 1500 prüft die Steuerung 15 wie auch bei der ersten Ausführungsform, ob das der Steuerung 15 für den aktuellen Verarbeitungsschritt zugeführte Bit des Multiplikators M aus dem ersten Register 110 gleich Null ist. Ist dies der Fall, so wird zu Programmpunkt 1550 verzweigt, andernfalls wird zu Programmpunkt 1700 verzweigt. Bei Programmpunkt 1550 wählt die Steuerung 15 nach dem Zufallsprinzip entweder die erste Schalterstellung oder die dritte Schalterstellung. Anschließend wird zu Programmpunkt 1600 verzweigt. Bei Programmpunkt 1600 prüft die Steuerung 15, ob die erste Schalterstellung von der Steuerung 15 gewählt wurde. Ist dies der Fall, so wird zu Programmpunkt 1650 verzweigt, andernfalls wird die dritte Schalterstellung eingestellt und das Programm verlassen. Bei Programmpunkt 1650 veranlaßt die Steuerung 15 den dritten Schalter 95 zur Verbindung des zweiten Schalters 65 mit dem achten Register 145, falls keine permanente Verbindung besteht. Weiterhin veranlaßt die Steuerung 15 den sechsten Schalter 100 zur Verbindung des fünften Schalters 70 mit dem ersten Eingang des dritten Addierers 50 falls keine entsprechend permanente Verbindung besteht. Weiterhin veranlaßt die Steuerung 15 den neunten Schalter 105 zur Verbindung des achten Schalters 75 mit dem ersten Eingang des fünften Addierers 55, falls keine entsprechende permanente Verbindung besteht. Anschließend wird das Programm verlassen.

Die dritte Ausführungsform macht nur dann Sinn, wenn mindestens ein Bit des Multiplikators M gleich Null ist, da ansonsten keine Verschlüsselung der numerischen Information erfolgt.

Es wird nach wie vor der Fall n = 3 betrachtet. An jedem Ausgang der Multiplizierer 20, 25, 30 liegt bei jedem Verarbeitungsschritt ein Bit eines Teilproduktes TP an. Der Divisor m stellt einen negativen Wert dar, dessen Bits $m_1$,

$m_2$, $m_3$ das Zweier-Komplement eines entsprechend positiven Divisors mp bilden. Die erste Schalterstellung ist nur wählbar, wenn das Teilprodukt TP gleich Null ist. Mittel zur Multiplikation in Form eines herkömmlichen Multiplikationsgliedes liegen in der dritten Schalterstellung vor und werden gebildet aus den Multiplizierern 20, 25, 30, aus dem achten Register 145, aus dem dritten Addierer 50 mit zugehörigem Übertragsregister 60, aus dem neunten Register 150, aus dem fünften Addierer 55 mit zugehörigem Übertragsregister 60 und aus dem zehnten Register 155. Das so gebildete Multiplikationsglied 20, 25, 30, 50, 55, 60, 145, 150, 155 bildet ein Produkt P durch stellenverschobene serielle Addition der Teilprodukte TP des Multiplikanden N mit den einzelnen Zahlenstellen des Multiplikators M unter Verwendung des dritten Addierers 50 und des fünften Addierers 55. Dabei ist beim ersten Verarbeitungsschritt der Inhalt des achten Register 145, des neunten Registers 150 und des zehmten Registers 155 jeweils gleich Null. Der Inhalt des zehnten Registers 155 wird nach jedem Verarbeitungsschritt in ein in Figur 1 nicht dargestelltes Ergebnisregister geschoben, wobei nach jedem Verarbeitungsschritt ein höherwertiges Bit dieses Ergebnisregisters mit dem jeweiligen Inhalt des zehnten Registers 155 gefüllt wird, beginnend vom niedrigstwertigen Bit bis zum höchstwertigen Bit. Auf diese Weise steht nach dem letzten Verarbeitungsschritt in dem in Figur 1 nicht dargestellten Ergebnisregister das vom Multiplikationsglied 20, 25, 30, 50, 55, 60, 145, 150, 155 gebildete Produkt P.

Dieses Produkt P stellt die zu verschlüsselnde numerische Information dar. Die Verschlüsselung erfolgt durch Reduktion des Produktes P um ein zufälliges Vielfaches des vorgegebenen positiven Divisors mp, wobei dieses Vielfache kleiner als das Produkt P ist. Das so gebildete reduzierte Produkt PR entspricht der verschlüsselten numerischen Information und wird dann an das Empfangsmodul 5 abgegeben. Die beschriebene Reduktion des Produktes P um ein zufälliges Vielfaches des vorgegebenen positiven Divisors mp kann auf zwei verschiedene Arten erfolgen. Eine erste Reduktionform ergibt sich dabei in jedem Verareitungsschritt, in dem die erste Schalterstellung von der Steuerung 15 gewählt wird. Dabei wird jeweils ein nullwertiges Teilprodukt TP am Ausgang der Multiplizierer 20, 25, 30 durch das Zweierkomplement des vorgegebenen positiven Divisors mp ersetzt und mittels des dritten Addierers 50 und des fünften Addierers 55 vom jeweiligen Zwischenprodukt, das im jeweils vorangehenden Verarbeitungsschritt gebildet wurde und dem zweiten Eingang des dritten Addierers 50 über das achte Register 145 und dem zweiten Eingang des fünften Addierers 55 über das neunte Register 150 zugeführt ist, abgezogen wird. Weiterhin wird für den jeweils nächsten Verarbeitungsschritt das achte Register 145 mit dem höchstwertigen Bit $m_1$ des Zweierkomplements des vorgegebenen positiven Divisors mp gefüllt. Je nachdem, in welchem Verarbeitungsschritt das Teilprodukt TP durch das Zweierkomplement des vorgegebenen positiven Divisors mp ersetzt wird, wird aufgrund der stellenverschobenen Addition ein unterschiedliches Vielfaches des vorgegebenen positiven Divisors mp vom Produkt P abgezogen.

Auf diese Weise wird ein gesamtes zufälliges Vielfaches des vorgegebenen positiven Divisors mp gegebenenfalls in mehreren Teilen vom Produkt P abgezogen.

Die Zufälligkeit des abzuziehenden Vielfachen des vorgegebenen positiven Divisors mp ergibt sich dadurch, daß die Steuerung 15 die Verarbeitungsschritte zufällig auswählt, bei denen das entsprechende nullwertige Teilprodukt TP durch das Zweierkomplement des vorgegebenen positiven Divisors mp ersetzt werden soll.

Die erste Reduktionsform ist dabei nur bei der ersten und der dritten Ausführungsform möglich. Die zweite Ausführungsform sieht keine Einstellung der ersten Schalterstellung vor.

Bei einer zweiten Reduktionsform wählt die Steuerung 15 bei der ersten Ausführungsform oder der zweiten Ausführungsform zufällig die zweite Schalterstellung. Dabei wird von dem in dem zugehörigen Verarbeitungsschritt gebildeten Zwischenprodukt TP, das nullwertig sein kann oder nicht, über den ersten Addierer 35, den zweiten Addierer 40 und den vierten Addierer 45 direkt und stellengleich das Zweierkomplement des vorgegebenen positiven Divisors mp addiert bzw. der positive Divisor mp von dem entsprechenden Teilprodukt TP abgezogen. Somit liegt am ersten Ausgang des ersten Addierers 35, am ersten Ausgang des zweiten Addierers 40 und am ersten Ausgang des vierten Addierers 45 jeweils ein Bit eines erweiterten Teilproduktes ETP an. Aufgrund der stellenverschobenen seriellen Addition von Teilprodukten TP und eines oder mehrerer erweiterter Teilprodukte ETP ergibt sich je nach Wahl des Verarbeitungsschritts für die Bildung des jeweiligen erweiterten Teilprodukes ETP ein unterschiedliches Vielfaches des vorgegebenen positiven Divisors mp, das vom Produkt P abgezogen wird. Da die,Wahl eines Verarbeitungsschrittes für die Bildung eines erweiterten Teilproduktes ETP zufällig ist, ist auch das vom Produkt P abgezogene Vielfache des vorgegebenen positiven Divisors mp zufällig. Dabei kann in einem Verarbeitungsschritt bereits ein gesamtes'zufälliges Vielfaches des vorgegebenen positiven Divisors mp abgezogen werden. Es ist auch möglich, in mehreren Verarbeitungsschritten jeweils einen Teil dieses gesamten vom Produkt P abzuziehenden zufälligen Vielfachen des vorgegebenen positiven Divisors mp abzuziehen.

Das durch die erste Reduktionsform oder die zweite Reduktionsform reduzierte Produkt P bildet dann die verschlüsselte numerische Information, die vom Sendemodul 1 an das Empfangsmodul 5 drahtgebunden oder drahtlos abgegeben wird. Die Reduktion kann dabei auch durch parallele Addition eines zufälligen Vielfachen des Negativen des vorgegebenen positiven Divisors mp erfolgen.

Figur 3(a) zeigt ein Beispiel für einen Multiplikanden N = 23, der mit einem Multiplikator M = 21 multipliziert werden soll. Dabei ergibt sich ein Produkt P = 483. Im binären Zahlensystem schreibt sich der Multiplikant N = 10111 und der Multiplikator M = 10101. Die Multiplikation im binären Zahlensystem weist zwei Teilprodukte TP auf, die nullwertig sind. Gemäß Figur 3(b) wird die gleiche Multiplikation gezeigt. Jedoch wird an der Stelle der nullwertigen Teilprodukte TP jeweils das Zweierkomplement des Doppelten eines vorgegebenen positiven Divisors mp = 11 stellenrichtig gesetzt. Aufgrund der stellenverschobenen Addition der Teilprodukte TP wird dabei einmal das Vierfache des vorgegebenen positiven Divisors mp und einmal das sechzehnfache des vorgegebenen positiven Divisors mp vom Produkt P abgezogen, so daß sich ein reduziertes Produkt PR = 263 ergibt. Der im fünften Register 130, im sechsten Register 135 und im siebten Register 140 gespeicherte Wert kann also auch bereits dem Zweierkomplement eines Vielfachen des vorgegebenen positiven Divisors mp entsprechen, das jedoch kleiner sein sollte, als das Produkt P. Der vorgegebene positive Divisor mp entspricht auch dem Wert, der bei der modulo Rechenoperation als Divisor verwendet wird. Somit ist sichergestellt, daß sowohl das Produkt P, als auch das reduzierte Produkt PR nach der Modulo-Rechenoperation zum gleichen Ergebnis führen. Da aus dem reduzierten Produkt PR aufgrund der Zufälligkeit des vom Produkt P abgezogenen Wertes keine Rückschlüsse auf das Produkt P getroffen werden können, kann statt des Ergebnisses der aufwendigen Modulo-Rechenoperation das reduzierte Produkt PR an das Empfangsmodul 5 übertragen werden, ohne daß im Empfangsmodul 5 Rückschlüsse auf den Multiplikanden N und den Multiplikator M getroffen werden können. Die Modulo-Rechenoperation kann dann im Empfangsmodul 5 erfolgen, um Rechenaufwand im Sendemodul 1 einzusparen.

Die Verschlüsselung erfolgt wie beschrieben durch Reduktion des Produktes P um ein zufälliges Vielfaches des vorgegebenen positiven Divisors mp, wobei dieses Vielfache kleiner als das Produkt P ist. Bei der ersten Reduktionsform wird wie beschrieben ein nullwertiges Teilprodukt,TP am Ausgang der Multiplizierer 20, 25, 30 zufällig durch das Zweierkomplement des vorgegebenen positiven Divisors mp ersetzt. Nullwertige Teilprodukte TP ergeben sich insbesondere an Nullstellen des Multiplikators M. Je geringer die Anzahl der nullwertigen Teilprodukte ist, desto geringer ist auch die Anzahl der Möglichkeiten für den Abzug eines Vielfachen des vorgegebenen positiven Divisors mp vom Produkt P. Damit sinkt auch die Anzahl der für eine ungewollte Entschlüsselung des Produktes P erforderlichen Abfrageversuche des Empfangsmoduls 5 zur Ermittlung der Identität des Sendemoduls 1. Je größer die Anzahl der nullwertigen Teilprodukte und damit die Anzahl der Nullstellen des Multiplikators M im Verhältnis zur vorgegebenen Stellenanzahl nM des Multiplikators M ist, desto geringer ist die Anzahl der für die Bildung des Multiplikators M möglichen Kombinationen aus Nullen und anderen Werten bei dieser vorgegebenen Stellenanzahl nM. Dies erleichtert die Entschlüsselung des Multiplikators M. Um die Sicherheit vor einer solchen ungewollten Entschlüsselung des Produktes P und des Multiplikators M zu maximieren, sollte daher sichergestellt werden, daß möglichst viele Kombinationen aus Nullen und anderen Werten für den Multiplikator M bei der vorgegebenen Stellenanzahl nM möglich sind. Dies ist dann der Fall, wenn die Anzahl nNM der Nullstellen des Multiplikators M der Hälfte der vorgegebenen Stellenanzahl nM des Multiplikators M entspricht, also nNM = nM/2 ist.

Im binären Zahlensystem ist die Anzahl nK der möglichen Kombinationen von nNM Nullen in einem binären Vektor von nM Stellen für den Multiplikator M wie folgt gegeben:

$$nK = \binom{nM}{nNM}.$$

Dabei gilt, daß die Anzahl nK der möglichen Kombinationen aus nNM Nullen in den Stellen des Multiplikators M maximal wird, wenn nNM = nM/2 ist. In diesem Fall ergibt sich für die Anzahl nK der möglichen Kombinationen aus nNM Nullen in den Stellen des Multiplikators M folgendes:

$$nK = \binom{nM}{nM/2} \approx \frac{2^{nM}}{nM+1} \approx 2^{nM - \log_2 nM}$$

In diesem Fall ergibt sich für die erste Reduktionsform, daß die Anzähl der Möglichkeiten für den Abzug eines Vielfachen des vorgegebenen positiven Divisors mp vom Produkt P mindestens so groß wie die Anzahl der möglichen Kombinationen aus Nullen und anderen Werten für den Multiplikator M ist, vor allem dann, wenn ein nullwertiges Teilprodukt TP am Ausgang der Multiplizierer 20, 25, 30 zufällig durch das Zweierkomplement eines zufälligen Vielfachen des vorgegebenen positiven Divisors mp ersetzt wird. Eine Entschlüsselung des Produktes P erfordert dann beim binären Zahlensystem etwa $2^{nM - \log_2 nM}$ Abfrageversuche des Empfangsmoduls 5. Dies ist aus Sicht der kryptographischen Sicherheit der Identität des Sendemoduls 1 optimal.

Da die Lage der Nullstellen des Multiplikators M außerhalb des Sendemoduls 1 nicht bekannt ist, wird der Grad der Verschlüsselung des Produktes P erhöht, wenn die Zahl der ersetzten nullwertigen Teilprodukte TP am Ausgang der Multiplizierer 20, 25, 30 durch das Zweierkomplement eines zufälligen Vielfachen des vorgegebenen positiven Divisors mp oder durch das Zweierkomplement des vorgegebenen positiven Divisors mp selbst erhöht wird. Eine maximale Verschlüsselung wird dann erreicht, wenn alle nullwertigen Teilprodukte TP entsprechend ersetzt werden.

**Patentansprüche**

1. Verfahren zur Verschlüsselung einer von einem Sendemodul (1) an ein Empfangsmodul (5) abzugebenden numerischen Information $Y_1$, insbesondere einer Identifikationsinformation, deren Gültigkeit im Empfangsmodul (5) in Abhängigkeit des bei Division der numerischen Information $Y_1$ durch einen vorgegebenen Divisor mp sich ergebenden Restes geprüft wird, **dadurch gekennzeichnet, dass** eine verschlüsselte numerische Information PR im Sendemodul (1) gebildet wird, indem mindestens ein vorgegebener Multiplikand N mit einem vorgegebenen zugeordneten mehrstelligen Multiplikator M multipliziert und vom dabei entstehenden Produkt P ein zufälliges Vielfaches des vorgegebenen Divisors mp subtrahiert wird, wobei dieses Vielfache kleiner als das Produkt P ist, und dass die so gebildete verschlüsselte numerische Information PR an das Empfangsmodul (5) abgegeben wird und dass für die Anzahl der nullvertigen Stellen des Multiplikators M etwa die Hälfte der Gesamtanzahl der Stellen des Multiplikators M gewählt wird.

2. Verfahren nach Anspruch 1, **dadurch gekennzeichnet, dass** das Produkt P durch stellenverschobene, vorzugsweise serielle, Addition von Teilprodukten TP des Multiplikanden N mit den einzelnen Zahlenstellen des Multiplikators M gebildet wird.

3. Verfahren nach Anspruch 2, **dadurch gekennzeichnet, dass** mindestens ein Teilprodukt TP mit dem Wert Null bei der Bildung des Produkts P durch einen negativen Teil des zufälligen Vielfachen, der durch den Divisor mp teilbar ist, oder durch das negative zufällige Vielfache selbst ersetzt wird.

4. Verfahren nach Anspruch 2 oder 3, **dadurch gekennzeichnet, dass** mindestens ein Teilprodukt TP bei der Bildung des Produkts P stellengleich mit zumindest einem negativen Teil des zufälligen Vielfachen, der durch den Divisor mp teilbar ist, oder mit dem negativen zufälligen Vielfachen selbst addiert wird, um ein erweitertes Teilprodukt ETP zu bilden.

5. Verfahren nach einem der vorherigen Ansprüche, **dadurch gekennzeichnet, dass** die verschlüsselte numerische Information PR und der Rest binär ermittelt werden.

6. Sendemodul (1), insbesondere Mobilfunkgerät, mit Mitteln (10) zur Verschlüsselung einer an ein Empfangsmodul (5) abzugebenden numerischen Information $Y_1$, insbesondere einer Identifikationsinformation, deren Gültigkeit im Empfangsmodul (5) in Abhängigkeit des bei Division der numerischen Information $Y_1$ durch einen vorgegebenen Divisor mp sich ergebenden Restes geprüft wird, **dadurch gekennzeichnet, dass** Mittel (20, 25, 30, 50, 55, 60, 145, 150, 155) zur Multiplikation vorgesehen sind, die mindestens einen vorgegebenen Multiplikanden N mit einem vorgegebenen zugeordneten mehrstelligen Multiplikator M multiplizieren, und dass Mittel (35, 40, 45, 50, 55, 60) zur Subtraktion vorgesehen sind, die vom dabei entstehenden Produkt P ein zufälliges Vielfaches des vorgegebenen Divisors mp subtrahieren, wobei dieses Vielfache kleiner als das Produkt P ist, dass das Sendemodul (1) die so gebildete verschlüsselte numerische Information PR an das Empfangsmodul (5) abgibt und dass die Anzahl der nullvertigen Stellen des Multiplikators M etwa der Hälfte der Gesamtanzahl der Stellen des Multiplikators M entspricht.

7. Sendemodul (1) nach Anspruch 6, **dadurch gekennzeichnet, dass** die Mittel (20, 25, 30, 50, 55, 60, 145, 150, 155) zur Multiplikation das Produkt P durch stellenverschobene, vorzugsweise serielle, Addition von Teilprodukten TP des Multiplikanden N mit den einzelnen Zahlenstellen des Multiplikators M bilden.

8. Sendemodul (1) nach Anspruch 7, **dadurch gekennzeichnet, dass** die Mittel (35, 40, 45, 50, 55, 60) zur Subtraktion eine Steuerung (15) umfassen, die prüft, ob eines oder mehrere Teilprodukte TP den Wert Null aufweist, um mindestens ein Teilprodukt TP mit dem Wert Null bei der Bildung des Produkts P durch einen negativen Teil des zufälligen Vielfachen, der durch den Divisor mp teilbar ist, oder durch das negative zufällige Vielfache selbst zu ersetzen.

9. Sendemodul (1) nach Anspruch 7 oder 8, **dadurch gekennzeichnet, dass** die Mittel (35, 40, 45, 50, 55, 60) zur Subtraktion Mittel (35, 40, 45, 60) zur Addition umfassen, die mindestens ein Teilprodukt TP bei der Bildung des Produkts P stellengleich mit zumindest einem negativen Teil des zufälligen Vielfachen, der durch den Divisor mp teilbar ist, oder mit dem negativen zufälligen Vielfachen selbst addieren, um ein erweitertes Teilprodukt ETP zu bilden.

10. Sendemodul (1) nach einem der Ansprüche 6 bis 9, **dadurch gekennzeichnet, dass** die Ermittlung der verschlüsselten numerischen Information PR und des Restes binär erfolgt.

**Claims**

1. Method for encrypting a numerical information item $Y_1$ to be output by a transmission module (1) to a reception module (5), in particular an identification information item, whose validity is tested in the reception module (5) as a function of the remainder produced during division of the numerical information item $Y_1$ by a prescribed divisor mp, **characterized in that** an encrypted numerical information item PR is formed in the transmission module (1) by multiplying at least one prescribed multiplicand N by a prescribed assigned multi-digit multiplier M, and subtracting a random multiple of the prescribed divisor mp from the product P produced in the process, this multiple being smaller than the product P, and **in that** the encrypted numerical information item PR thus formed is output to the reception module (5), and **in that** approximately half the total number of the digits of the multiplier M are selected for the number of the zero digits of the multiplier M.

2. Method according to Claim 1, **characterized in that** the product P is formed by digit-shifted, preferably serial, addition of partial products TP of the multiplicand N with the individual number digits of the multiplier M.

3. Method according to Claim 2, **characterized in that** when forming the product P at least one partial product TP with the value zero is replaced by a negative part of the random multiple which can be divided by the divisor mp, or by the negative random multiple itself.

4. Method according to Claim 2 or 3, **characterized in that** when forming the product P at least one partial product TP is added, with the same number of digits, to at least one negative part of the random multiple which can be divided by the divisor mp, or to the negative random multiple itself, in order to form an extended partial product ETP.

5. Method according to one of the preceding claims, **characterized in that** the encrypted numerical information item PR and the remainder are determined in a binary fashion.

6. Transmission module (1), in particular a mobile radio unit, having means (10) for encrypting a numerical information item $Y_1$ to be output to a reception module (5), in particular an identification information item, whose validity is tested in the reception module (5) as a function of the remainder produced during division of the numerical information item $Y_1$ by a prescribed divisor mp, **characterized in that** provided for multiplication are means (20, 25, 30, 50, 55, 60, 145, 150, 155) which multiply at least one prescribed multiplicand N by a prescribed assigned multi-digit multiplier M, and **in that** provided for subtraction are means (35, 40, 45, 50, 55, 60) which subtract a random multiple of the prescribed divisor mp from the product P produced in the process, this multiple being smaller than the product P, **in that** the transmission module (1) outputs the encrypted numerical information item PR thus formed to the reception module (5), and **in that** the number of the zero digits of the multiplier M corresponds to approximately half the total number of the digits of the multiplier M.

7. Transmission module (1) according to Claim 6, **characterized in that** the means (20, 25, 30, 50, 55, 60, 145, 150, 155) for multiplying form the product P by digit-shifted, preferably serial addition of partial product TP of the multiplicand N with the individual number digits of the multiplier M.

8. Transmission module (1) according to Claim 7, **characterized in that** the means (35, 40, 45, 50, 55, 60) for subtraction comprise a controller (15) which checks whether one or more partial products TP has the value zero, in order when forming the product P to replace at least one partial product TP with the value zero by a negative part of the random multiple which can be divided by the divisor mp, or by the negative random multiple itself.

9. Transmission module (1) according to Claim 7 or 8, **characterized in that** the means (35, 40, 45, 50, 55, 60) for subtraction comprise means (35, 40, 45, 60) for addition which when forming the product P add at least one partial product TP, with the same number of digits to at least one negative part of the random multiple which can be divided by the divisor mp, or to the negative random multiple itself, in order to form an extended partial product ETP.

**10.** Transmission module (1) according to one of Claims 6 to 9, **characterized in that** the encrypted numerical information item PR and the remainder are determined in a binary fashion.

**Revendications**

1. Procédé de chiffrage d'une information numérique $Y_1$ à envoyer d'un module d'émission (1) à un module de réception (5), notamment d'une information d'identification dont la validité est vérifiée dans le module de réception (5) en fonction du reste résultant d'une division de l'information numérique $Y_1$ par un diviseur mp prédéterminé,
   **caractérisé en ce qu'**
   une information PR numérique chiffrée est formée dans le module d'émission (1) en multipliant un multiplicande N prédéterminé avec un multiplicateur M à plusieurs chiffres associé prédéterminé et en soustrayant du produit P ainsi obtenu un multiple aléatoire du diviseur mp prédéterminé, ce multiple étant plus petit que le produit P, et l'information PR numérique chiffrée ainsi formée est envoyée au module de réception (5), et pour le nombre des chiffres de valeur zéro du multiplicateur M, on choisit sensiblement la moitié du nombre total des chiffres du multiplicateur M.

2. Procédé selon la revendication 1,
   **caractérisé en ce que**
   le produit P est formé par addition permutée de préférence sérielle de produits partiels TP du multiplicande N aux différents chiffres du multiplicateur M.

3. Procédé selon la revendication 2,
   **caractérisé en ce qu'**
   au moins un produit partiel TP ayant la valeur de zéro est remplacé lors de la formation du produit P par une partie négative du multiple aléatoire qui peut être divisée par le diviseur mp, ou par le multiple aléatoire négatif lui-même.

4. Procédé selon la revendication 2 ou 3,
   **caractérisé en ce que**
   lors de la formation du produit P, au moins un produit partiel TP est additionné au même endroit à au moins une partie négative du multiple aléatoire peut être divisée par le diviseur mp, ou au multiple aléatoire négatif lui-même, pour former un produit partiel ETP plus étendu.

5. Procédé selon l'une quelconque des revendications précédentes,
   **caractérisé en ce que**
   l'information PR numérique chiffrée et le reste sont déterminés de manière binaire.

6. Module d'émission (1), notamment appareil de radio mobile, comprenant des moyens (10) pour chiffrer une information numérique $Y_1$ à envoyer à un module de réception (5), notamment d'une information d'identification dont la validité est vérifiée dans le module de réception (5) en fonction du reste résultant d'une division de l'information numérique $Y_1$ par un diviseur mp prédéterminé,
   **caractérisé en ce que**
   des moyens (20, 25, 30, 50, 55 60, 145, 150, 155) sont prévus pour la multiplication, qui multiplient au moins un multiplicande N prédéterminé par un multiplicateur M à plusieurs chiffres associé prédéterminé, et des moyens (35, 40, 45, 50, 55, 60) sont prévus pour la soustraction, qui soustraient du produit P alors obtenu un multiple aléatoire du diviseur mp prédéterminé, ce multiple étant plus petit que le produit P, le module d'émission (1) envoie l'information PR numérique chiffrée ainsi formée au module de réception (5), et le nombre des chiffres de valeur zéro du multiplicateur M correspond sensiblement à la moitié du nombre total des chiffres du multiplicateur M.

7. Module d'émission selon la revendication 6,
   **caractérisé en ce que**
   les moyens (20, 25, 30, 50, 55, 60, 145, 150, 155) pour la multiplication forment le produit P par addition permutée de préférence sérielle de produits partiels TP du multiplicande N aux différents chiffres du multiplicateur M.

8. Module d'émission (1) selon la revendication 7,
   **caractérisé en ce que**
   les moyens (35, 40, 45, 50, 55, 60) pour la soustraction comprennent une commande (15) qui vérifie si l'un ou plusieurs des produits partiels TP présentent la valeur de zéro pour remplacer au moins un produit partiel TP ayant la valeur de zéro lors de la formation du produit P par une partie négative du multiple aléatoire qui peut être divisée par le diviseur mp, ou par le multiple aléatoire négatif lui-même.

9. Module d'émission (1) selon la revendication 7 ou 8,
**caractérisé en ce que**
les moyens (35, 40, 45, 50, 55, 60) pour la soustraction comprennent des moyens (35, 40, 45, 60) pour l'addition, qui, lors de la formation du produit P, additionnent au moins un produit partiel TP au même endroit à au moins une partie négative du multiple aléatoire qui peut être divisée par le diviseur mp, ou au multiple aléatoire négatif lui-même, pour former un produit partiel ETP plus étendu.

10. Module d'émission selon l'une des revendications 6 à 9,
**caractérisé en ce que**
la détermination de l'information PR numérique chiffrée et du reste est réalisée de manière binaire.

Fig. 1

Fig. 2

```
N= 1 0 1 1 1                    N= 2 3
    M= 1 0 1 0 1  x             M= 2 1  x
        1 0 1 1 1               P= 4 8 3 = 1 0    (mod 1 1)
      0 0 0 0 0
    1 0 1 1 1
  0 0 0 0 0
1 0 1 1 1           +
1 1 1 1 0 0 0 1 1
```

## Fig. 3a

```
N= 1 0 1 1 1                    N= 2 3
    M= 1 0 1 0 1                M= 2 1  x
        1 0 1 1 1               + 2 3              (mod 1 1)
1 1 1 1 1 0 1 0 1 0             - 2 2 x 2
        1 0 1 1 1               + 2 3 x 4
1 1 1 0 1 0 1 0                 - 2 2 x 8
    1 0 1 1 1       +           + 2 3 x 1 6
...0 0 1 0 0 0 0 0 1 1 1        PR= 2 6 3 = 1 0    (mod 1 1)
```

## Fig. 3b

Fig. 4